# EUROPEAN PATENT APPLICATION

(11) **EP 0 665 446 A2**
(43) Date of publication of application: **02.08.1995**
(21) Application number: 94117881.6
(22) Date of filing: 11.11.1994
(51) Int. Cl.: G01S 7/484, G01S 7/481

(54) **Light beam scanner and integrated laser arrangement used for the scanner**

(30) Priority: 12.11.1993 JP 282919/93
(71) Applicant: NEC CORPORATION, Tokyo (JP)
(72) Inventor: Murata, Shigeru, Minato-ku, Tokyo (JP)
(74) Representative: VOSSIUS & PARTNER

(57) **Abstract**

A light beam scanner suitable for a scanning pulsed-laser rangefinder, which is electrically controlled without a mechanical factor, is provided, comprising an integrated laser element including a plurality of laser diodes and a light amplifier, a laser diode driving circuit, a light amplifier driving circuit and an optical output lens arrangement. The plurality of laser diodes are sequentially driven and the light amplifier is also driven in synchronism with the operation of the laser diodes. Consequently, scanning light pulses having high power and high speed are delivered from the optical output lens arrangement while scanning.

## Description

This invention relates to a laser-beam scanner applied such as to a scanning pulsed-laser rangefinder and an integrated laser arrangement used for the scanner.

As well-known, a pulsed-laser rangefinder determines the distance to an object by measuring the time it takes for a laser pulse to travel to the object and return. Such pulsed-laser rangefinder is applied to a collision-alarm apparatus for automobiles, surveying equipment for public works, and so on. To this end, narrow-width and high-power light-pulses are applied. In this case, a solid-state laser or a laser diode (LD) is used as a light pulse source. The rangefinder using the LD as the light-pulse source has advantages of a compact size and less power consumption. In this case, a broad-area type LD having a widened stripe width of light-emitted area to 100 µm or more is usually used. As drive circuits for the LD, a circuit consisting of a capacitor and a thyristor is commonly used.

A scanning rangefinder is obtained by attaching to this pulsed-laser rangefinder a light beam scanner for scanning spacially the light beam having a narrow radiation angle. This scanning rangefinder can determine a distance and an angle to an object at the same time. In other words, it can determines the shape of the object by performing one- or two-dimensional scanning. Therefore, it has been expected that a scanning rangefinder will be applied more extensively to fields.

In a conventional scanning pulsed-laser rangefinder, to scan the outputted light beam, a reflection mirror is applied behind an output lens, and this reflection mirror is moved mechanically. For example, Japanese Patent Laid-Open Application No. Hei. 2-59692 (published Frequency 28, 1990) shows a laser radar using an optical scanning system. Japanese Patent Laid-Open Application No. Hei. 3-6512 (published January 14, 1991) shows a light beam scanner applied for a laser printer, which uses a hologram lens for beam scanning. Japanese Patent Laid-Open Application No. Hei.1-212004 (published August 25, 1989) shows a light-controlled phased array antenna in which a laser beam is used for controlling phases of microwave signals. Therefore, there is no sense to realize a pulsed-laser rangefinder.

On the other hand, attemps to provide light beam scanning function to a LD itself are proposed. One is reported in the article by S. Mukai, et al., Proceedings of the 10th Semiconductor Laser Conference, F-1, pp. 74-75, 1986, Kanagawa, Japan, in which an integrated laser element has light-beam deflection function in the vicinity of the output of LD, thereby the outputted direction of laser beam is controlled. However, the deflection angle is very narrow so that it is impossible to apply this to a scanning rangefinder.

Another technique related to the present invention is disclosed in the article by R. Rarke, et al., IEEE Photonics Technology Letters, Vol. 5, pp. 297-300, 1993, in which a monolithically-integrated laser element consisting of an LD and a broad area type semiconductor light amplifier is reported. In this laser element, the outputted light from the LD is amplified through the light amplifier, and outputted. The laser element is not necessarily developed for use in a rangefinder. However, it is possible to apply it to a pulsed laser rangefinder because of making easy high-speed switching and output of a narrow-and-high-power laser pulse. Namely, separation of a LD drive circuit from a laser amplifier drive circuit is possible. That is, the LD outputs a relatively low output pulse, and the amplifier may amplify the low output pulse to deliver a high-power light pulse, and so the LD drive circuit can drive the LD by a relatively small power supply. Therefore, high-speed switching is possible, for example, by use of a high-speed transistor. On the other hand, a current pulse width in the amplifier may be wide and hence it is easy to construct the light amplifier drive circuit because the pulse width of the light pulse depends on the light pulse width outputted from the LD.

The conventional laser beam scanners mentioned above have drawbacks as described in the following. The scanning type rangefinder using a mechanical reflector inevitably requires large size equipment and well maintenance should be necessary for stability. For the two-dimensional scanning of a light beam, an optical structure becomes more complicated and high speed scanning is difficult.

For high-power output pulse source, the integrated element consisting of the LD and the optical amplifier have been developed as described above. However, there is no integrated laser element capable of scanning a high-power light beam suitable for a scanning pulsed-laser rangefinger, in practice. The integrated laser element having the additional light-beam deflecting function described above is still at an initial development stage and, thus, the light output power is small and satisfactory characteristics, for example, a scanning angle are not achieved.

It therefore is an object of the present invention to provide a light beam scanner permitting electrical scanning and applied to a scanning pulsed-laser rangefinder, etc.

It is another object of the present invention to provide an integrated laser element suitable for such scanning pulsed-laser rangefinder.

According to the present invention, there is provided a light beam scanner suitable for a scanning rangefinder, comprising an integrated laser arrangement including a plurality of arrayed laser diodes and a light amplifier for amplifying lights emitted from the laser diodes and an optical output lens arrangement, wherein the integrated laser arrangement is disposed in the vicinity of focus of the optical output lens arrangement and the light amplifier is driven in synchronism with the light-emission from the laser diodes.

Furthermore, the present invention provides the above-mentioned integrated laser arrangement.

The above and other objects, features and advantages of the present invention will become more apparent taken in conjunction with the accompanying drawings in which,
Fig. 1 shows a basic configuration of a light beam scanner according to the present invention;
Fig. 2 is a timing chart for explaining function of the configuration shown in Fig. 1;
Fig. 3 shows a structural diagram of an integrated laser element according to the present invention;
Fig. 4 shows a diagram of an embodiment of the light beam scanner according to the present invention;
Fig. 5 shows a block diagram of an LD driving circuit contained in Fig. 4; and
Fig. 6 shows a block diagram of a light amplifier driving circuit contained in Fig. 4.

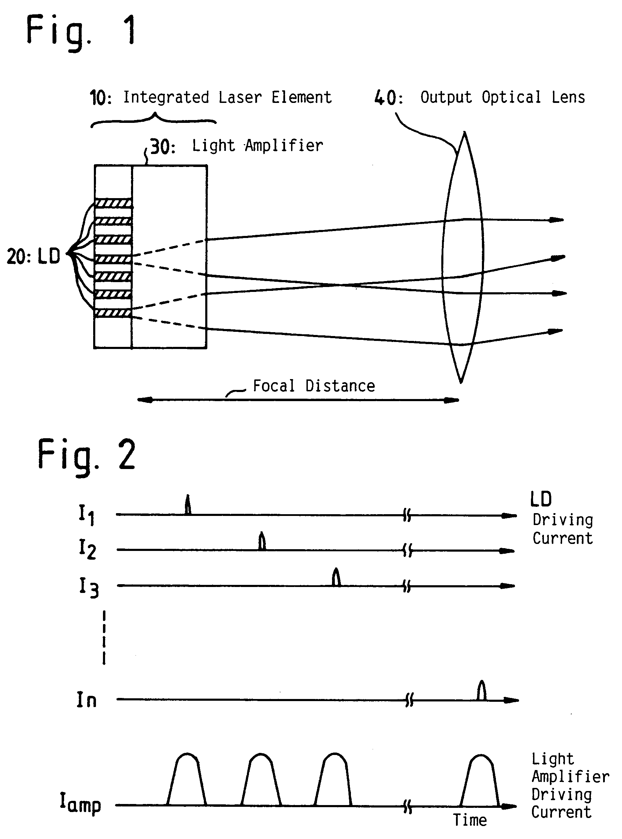

Referring to Fig. 1 showing a basic configuration of a light beam scanner according to the present invention, a monolithically-integrated laser element 10 comprises a one-dimensional array of n (n ≧ 2) laser diodes LD 20 on a semiconductor substrate and a semiconductor light amplifier 30 for light-amplifying the output lights from the laser diode array LD 20. The structure of the light amplifier LD 30 is of a broad area type. The n laser diodes LD 20 are driven in sequence by pulse currents and deliver pulse lights in sequence. The outputted pulse lights are light-amplified in sequence by the light amplifier 30, and emitted through an output lens 40. The laser diodes LD 20 are located almost at the focus of the output lens 40, and therefore the output direction (angle) of the laser light is different each laser diode LD 20. This direction is determined by the interval between the laser diodes LD 20 and the focal distance of the output lens 40. For example, on the assumption that the interval between the two adjacent laser diodes LD 20 is 200 µm, and the focal distance of the output lens is 40 mm, the output angle of the laser light is different by about 5 m radians between the adjacent laser diodes LD 20. Hence, electrical scanning with laser lights every 5 m radians of output angle is possible by applying pulse currents to the laser diodes LD 20 in sequence. Further, if the interval between laser diodes is changed to 100 µm, 2.5 m radians scanning is obtained.

Fig. 2 shows a timing chart of the individual laser diodes LD 20 and the light amplifier 30. The light amplifier 30 drives at a fixed period such as 10 kHz and by a pulse current Iₐₘₚ of which a peak value is large (for example, about 100 ampares). In this example, only one light-amplifier driver circuit is used, and the width of the pulse current is allowed to be relatively wide (about 100 ns), and hence the large-current drive is easy. On the other hand, the n laser diodes LD 20 are driven in sequence by narrow-width (about 10 ns) pulse currents Iₗ to Iₙ. The pulse currents Iₗ to Iₙ for driving the laser diodes LD 20 are synchronous with timing of pulse current Iₐₘₚ for the drive of the light amplifier 30. The laser diodes driver circuits are needed n in number but each can be driven by a relatively small current, this allowing miniaturization.

Also by using a usual broad-area type high-output laser diode array, laser-light scanning can be performed electrically. In this case however large pulse current (more than 10 A) must be supplied individual laser diodes in sequence. For this reason, both high-speed operation and miniaturization are not realizable. Additionally in this case it is needed to increase the stripe width of a luminous area of each laser diode and therefore it is impossible to decrease the intervals between the laser diodes, resulting in a large entire optical system.

On the other hand, the usage of the integrated laser element 10 shown in Fig. 1 has advantages described in the following. First, because of permitting the drive current of each laser diode LD 20 to be small, a usual transistor circuit can be used as the laser-diode driver circuit, which makes it to switch the integrated laser element 10 at a desired high speed, and also the integrated laser element 10 arrayed can be miniaturized. The integrated laser element 10 is advantageous in light-emission delay and in jitter. Additionally, narrow intervals between individual laser diodes LD 20 and thereby a smaller optical system can be implemented.

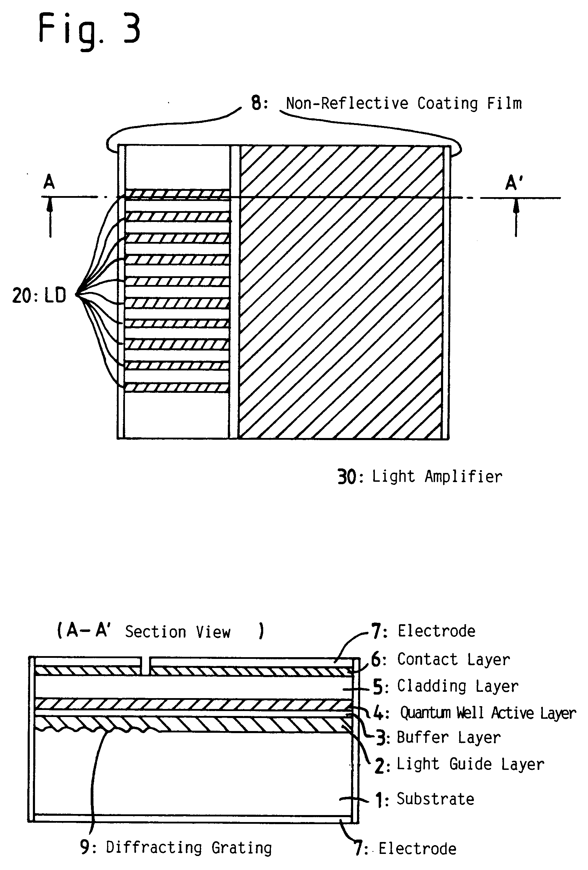

Fig. 3 shows schematically the structure of the integrated laser element 10 which is constructed of the one-dimensional array of ten laser diodes LD 20 and the semiconductor light amplifier 30 for amplifying the output lights from the laser diodes. These laser diodes are distributed feedback lasers easily monolithickly integrated with the light amplifier 30 and having a ridge guide structure for transverse-mode control. The light amplifier 30 is of the broad-area type, and amplifies the pulse light outputted from the 10 laser diodes LD 20. The output lights from the laser diodes LD 20 are spreaded in the form of fan, and hence the gain saturation of the light amplifier 30 is small and an high-output pulse light can be obtained.

Referring to Fig. 3 showing the cross-section of the integrated laser element 10, a fabrication process and structure of the integrated laser element 10 will be briefly set forth under. To begin with, a diffraction grating 9 is formed by the use of two-light-flux interference method at the place where the laser diodes of an n-type InP substrate 1 is to be formed. Next, over the entire surface of the substrate 1, n-type InGaAsP light guide layer 2, n-type InP buffer layer 3, InGaAsP quantum well active layer 4, p-type InP cladding layer 5, p-type InGaAs contact layer 6 are grown in sequence by the organic-metal chemical vapor deposition technique. The structures of the active layer of the laser diodes LD 20 and the light amplifier 30 are entirely the same. The part of the laser diodes 20 is processed into a ridge guide structure by usual photolithography. Subsequently, an electrode 7 is formed in the laser diode part LD 20 and the light amplifier 30. Finally, the element is cut off, and then a non-reflecting coating film 8 is formed the end surfaces of the sides of the laser diodes LD 20 and the light amplifier 30, respectively.

This integrated laser element 10 measures: overall length 1500 µm, width 1400 µm, resonator length 500 µm, stripe width 4 µm, interval between the adjacent laser diodes LD 20 100 µm, and length of light amplifier 30 1000 µm. The oscillation length of the integrated laser element 10 is 1.5 µm band.

The embodiment of the integrated laser element will be additionally set forth. First, in this embodiment, the one light amplifier 30 and a single light-amplifier driver circuit for driving it are used. According to circumstances, for reducing the burden of a light-amplifier driver circuit, the structure of the one light amplifier 30 may be divided into two or more amplifiers which are driven with the corresponding number of light-amplifier driver circuits. This can be implemented merely by dividing the electrode 7 of the light amplifier 30 in the integrated laser element 10 with almost the same layer-structure and fabrication process as those of the aforementioned embodiment.

In addition, each laser diode LD 20 in the embodiment has the narrow-stripe ridge guide structure which oscillates in the basic transverse mode. However, there is no necessity of such oscillation and it is allowed to oscillate in the multi-transverse mode by increasing somewhat the stripe width.

The stripe directions of the laser diodes LD 20 in this embodiment are parallel to each other. According to circumstances, stripe directions of the laser diodes may be previously angled to the optical axis of the output optical system, and thereby the output angle of the laser light can be set to a wider range. The number of laser diodes LD 20 and the intervals therebetween can be modified from the embodiment. The manufacturing process in this case is much the same as in this embodiment except the alternation to a suitable photomask in the processing step.

In this embodiment, the laser diodes are made from the InP system and the resulting oscillation wavelength is 1.5 µm band. The present invention can be applied to an oscillation wavelength of 0.8 µm band by using a different system such as GaAs system.

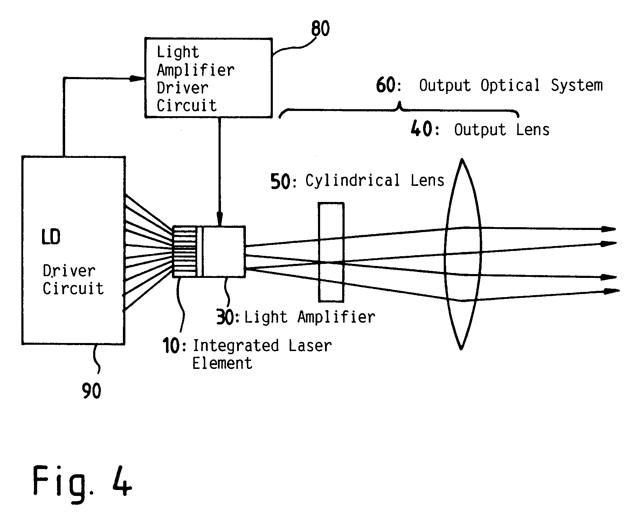

Referring to Fig. 4, a light beam scanner using the integrated laser element of the present invention will be set forth. It comprises the integrated laser element 10, a light amplifier driver circuit 80 for driving the light amplifier 30, a laser diodes driver circuit 90 for pulse-driving the ten laser diodes LD 20 in synchronism with the light amplifier driver circuit 80, and an output optical-system 60 which delivers the light beam emitted from the integrated laser element 10 to the external. The output optical-system 60 includes an output lens 40 and a cylinderical lens 50 for shaping the light beam from the integrated laser element 10.

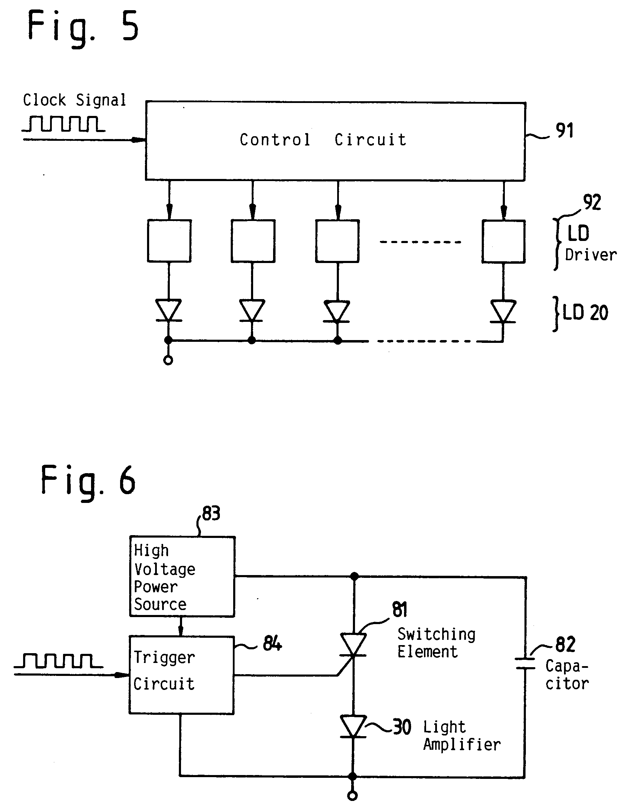

Fig. 5 shows a block diagram of the laser-diode driver circuit 90 shown in Fig. 4, which comprises a control unit 91 and ten laser diodes drivers 92. The control unit 91 outputs trigger signals in sequence to the laser diode drivers 92 in synchronism with a clock signal having a fixed period. Assuming that the clock signal has a frequency of, for example, 10 kHz, the trigger signals having a period of 1 kHz, each being deviated by 0.1 ms in phase, are sent to the laser diode driver unit 92 in sequence. The laser diode drivers 92 generate a pulse signal having a pulse width of 5 - 20 (ns) in response to the trigger signal and amplify this pulse signal so as to have a peak value of 100 ∼ 500 (mA). Accordingly, the amplified pulse signals are supplied in sequence to the ten laser diodes 20 which accordingly emit pulse-lights of a period of 0.1 ms in sequence.

Fig. 6 shows a block diagram of the light amplifier drive circuit 80 shown in Fig. 4, which comprises a switching element 81 such as a high-breakdown-voltage thyrister connected in series to the light amplifier 30 and a capacitor 82 connected in parallel to these. First, the capacitor 82 is charged by a high-voltage power source 83 and, then, the switching element 81 is turned on in response to a trigger signal delivered from a trigger circuit 84 which operates in synchronism with the clock signal. In response to the turn-on state of the switching element 81, the pulse current is supplied to the light amplifier 30. The peak value of the pulse current is regulated by the voltage of the high-voltage power source and the pulse width thereof is regulated by a capacity of the capacitor 82. The peak value and pulse width are set to tens-hundreds (A) and 100 - 500 (ns), respectively. The maximum gain of the light amplifier is determined by the peak value of the pulse current. In this case, the phase of the trigger signal is controlled such that the timing of the pulse light from the LD 20 coincides with that of the peak pulse current of the light amplifier 30.

Turning back to Fig. 4, the ten LD 20 are sequentially driven by the pulse signal and therefore emits the pulsed-lights. These pulsed-lights are sequentially amplified by the light amplifier 30 in response to the pulse current and delivered through the cylindrical lens 50 and the output lens 40 to the external. Since the light emission angles associated with the respective laser diodes are different each other, the lights are accordingly scanned. In this embodiment, the interval between the diodes are 100 µm and the focal distance of the output lens is 40 mm. Thus, the emission angle of the laser light is shifted by 2.5 m radians form one diode to the adjacent diode and, therefore, the scanning angle of 25 m radians is obtained as a whole, by applying the ten laser diode array.

As described above, according to the present invention, there is provided the light beam scanner which requires no mechanical element. Further, the integrated laser element or arrangement combining a plurality of laser diodes and a light amplifier, which is most suitable for the light beam scanner, is also obtained.

Various modifications will become possible for those skilled in the art after receiving the teachings of the present disclosure without departing from the scope thereof.

## Claims

1. A light beam scanner comprising:
an integrated laser element including a plurality of laser diodes and a light amplifier, said plurality of laser diodes being arrayed and faced to said light amplifier, and
an optical lens for delivering light beams, said light beams being respectively emitted from said plurality of laser diodes and amplified by said light amplifier.

2. A light beam scanner as claimed in claim 1, wherein said integrated laser element is substantially positioned at a focus of said optical lens.

3. A light beam scanner as claimed in claim 1 or 2, further comprising:
a first driving circuit for sequentially driving said plurality of laser diodes, and
a second driving circuit for driving said light amplifier in synchronism with operation of said first driving circuit.

4. A light beam scanner as claimed in claim 3, wherein
each driving period of said second driving circuit is set to be wider than each driving period of said first driving circuit.

5. A light beam scanner as claimed in any of claims 1 to 4, comprising a cylindrical lens disposed between said integrated laser element and said optical lens.

6. An integrated laser arrangement comprising a plurality of arrayed laser diodes for emitting lights, respectively, and a light amplifier for amplifying said lights emitted from said arrayed laser diodes, said light amplifier being faced to said arrayed laser diodes.
